# DEMANDE DE BREVET EUROPEEN

(11) **EP 1 280 215 A1**
(43) Date de publication de la demande: **29.01.2003**
(21) Numéro de dépôt: 01202862.7
(22) Date de dépôt: 26.07.2001
(51) Int. Cl.: H01M 4/96, H01M 8/10, B01J 21/18, C04B 38/00, C08G 8/22, C08J 3/075, C08J 9/28, H01M 4/88, H01M 4/86

(54) **Matériau carboné poreux**

(71) Demandeur: University of Liege, 4020 Liège (BE)
(72) Inventeur: Pirard, Jean-Paul, c/o Université de Liège, 4000 Liège (BE); Pirard, René, c/o Université de Liège, 4000 Liège (BE); Job, Nathalie, c/o Université de Liège, 4000 Liège (BE)

(57) **Abrégé**

Une méthode de préparation d'un gel organique chargé ou non en métal comprenant un mélange de benzène hydroxylé et d'aldéhyde (en particulier du résorcinol et du formaldéhyde), dans un solvant est décrite, dans laquelle la texture poreuse du gel est régulée par ajustement du pH du mélange de départ. Il est également décrit une méthode de préparation d'un matériau carboné, chargé ou non en métal et obtenu par séchage puis pyrolyse du gel organique correspondant, dont la texture poreuse est régulée selon le pH du mélange de départ. Les matériaux carboné obtenus peuvent être utilisés en catalyse chimique ou dans la fabrication d'electrode de piles à combustible.

## Description

L'invention concerne un gel organique à texture poreuse déterminée, particulièrement un gel organique chargé en métal et leur méthode de préparation. L'invention concerne également un matériau carboné poreux, et plus particulièrement un matériau carboné poreux chargé en métal ainsi que leur méthode de préparation.
Enfin, l'invention concerne l' utilisation du matériau carboné poreux obtenu, en catalyse ou lors de fabrication d'électrodes de piles à combustible.

Les matériaux carbonés poreux sont connus de l'état de la technique sous le nom de mousse de carbone, d'aérogel ou de xérogel.
Le nom de mousse de carbone est utilisé pour désigner un matériau poreux de basse densité qui est caractérisé par une dispersion de gaz dans un solide ou un liquide. La mousse peut être considérée comme une mousse à cavités fermées ou ouvertes. Parmi les mousses à cavités ouvertes on distingue les xérogels et les aérogels.
Les aérogels sont fort semblables aux xérogels. Ce sont des produits de séchage d'un gel traditionnel Ce sont des matériaux carbonés poreux de haute surface spécifique comprenant des micropores (taille des pores inférieure à 2 nm), des mésopores (taille des pores entre 2 et 50 nm) et des macropores (taille des pores supérieure à 50 nm). Néanmoins les xérogels qui sont obtenus par séchage dans des conditions non supercritiques, sont considérés par M.W.Droege dans US 5,945,084 comme plus denses que les aérogels obtenus par séchage supercritique. Les xérogels sont caractérisés par une réduction du nombre des macro-et méso-pores souvent attribuée à une texture contractée apparaissant lors d'un séchage par évaporation du solvant.

Les matériaux carbonés poreux sont généralement des matériaux obtenus à partir de gel organique de benzène hydroxylé-aldéhyde. Les gels de benzène hydroxylé-aldéhyde sont obtenus par polycondensation d'un benzène hydroxylé avec un aldéhyde. Ils sont ensuite séchés conventionnellement de manière supercritique ou par transfert de solvant puis pyrolysés sous atmosphère inerte pour former un matériau carboné à texture poreuse.

Pour donner suffisamment de résistance mécanique à un matériau carboné poreux, tout en gardant une perméabilité aux gaz suffisante, il importe de maîtriser surface spécifique, densité et distribution des tailles des pores c'est-à-dire de fixer en quelle proportions doivent se répartir micro, méso et macropores. Autrement dit, il importe de maîtriser la texture poreuse du matériau. On donnera comme définition et caractérisation de la texture poreuse, celles communément reconnues et décrites par A.J.Lecloux dans son article Texture of Catalysis édité dans Catalysis Science and Technology par R.Anderson et M.Boudart en 1981.

Nous avons maintenant trouvé qu'en ajustant le pH du mélange de départ dans un intervalle adéquat, il est possible de maîtriser la texture non seulement du gel organique initial obtenu à partir du mélange de départ, du gel intermédiaire obtenu après séchage, mais également du matériau carboné final obtenu après pyrolyse, et cela qu'ils soient ou non chargés en métal.

La présente invention concerne selon un premier aspect une méthode de préparation d'un gel organique à texture poreuse déterminée comprenant un mélange de benzène hydroxylé et d'aldéhyde dans un solvant et dont la texture du gel est régulée par ajustement du pH du mélange de départ.

Les benzènes hydroxylés selon l'invention sont par exemple du phénol, résorcinol, catéchol, hydroquinone, phloroglucinol, polyhydroxybenzène ou leur mélange. On choisira de préférence du résorcinol ou 1,3-dihydroxybenzène.

Les aldéhydes selon l'invention sont par exemple du formaldéhyde, glyoxal, glutaraldéhyde, furfural ou leurs mélanges. Les aldéhydes de départ peuvent également être en solutions aqueuses ou dans un autre solvant.

Avec le résorcinol, comme benzène hydroxylé, on choisira de préférence le formaldéhyde pour former un mélange de produits de condensation et d'addition.

Les benzènes hydroxylés et aldéhydes peuvent être mélangés en proportion variable à toutes températures comprises entre la température de congélation du solvant et de son point d'ébullition.
Dans le cas du mélange résorcinol-formaldéhyde qui peut se faire à température ambiante, on choisira de préférence un rapport molaire résorcinol/formaldéhyde fixé à 1 : 2.

Le mélange de benzène hydroxylé et d'aldéhyde a lieu dans un solvant qui est aisément séché à l'air comme par exemple de l'eau, une acétone, un alcool ou leur mélange. Le solvant dans lequel a lieu le mélange peut être déjà présent dans l'aldéhyde de départ ou bien ajouté au moment du mélange de départ.
Dans le cas de l'eau, le mélange de départ présente généralement un pH acide compris entre 2 et 4.
Pour augmenter le pH du mélange de départ, on utilise une base telle qu' un hydroxyde alcalin ou alcalino-terreux suffisamment soluble dans le solvant. On choisira par exemple NaOH, KOH ; un carbonate alcalin ou alcalino-terreux suffisamment soluble tel que Na₂CO₃, Li₂CO₃, K₂CO₃ ; du tétraméthyl-ammonium ou encore toute base ne réagissant pas avec des monomères du mélange de départ.
On choisira de préférence un hydroxyde alcalin et plus particulièrement du NaOH ou hydroxyde de soude.

Le gel organique benzène hydroxylé-aldéhyde correspondant est obtenu dès qu'un changement de viscosité est observé.

En particulier la méthode de préparation du gel organique à texture poreuse déterminée est caractérisée par une addition d'un sel de métal au mélange de départ.

Le sel de métal selon l'invention est un sel soluble dans la solution de benzène hydroxylé-aldéhyde dans le solvant choisi, ou rendu soluble par complexation soit directement avec le benzène hydroxylé, soit indirectement par un agent complexant tel que, par exemple, une amine, un cycle benzénique ou un hétérocycle. Les complexants utilisés peuvent être, par exemple, l'EDTA (acide éthylènediaminetétraacétique), l'HEDTA (acide hydroxyéthylènediamine-triacétique), le DTPA (acide diéthylènetrinitrilopentaacétique) ou le DOTA (acide 1,4,7,10-tétraazacyclododécane-1,4,7,10-tétraacétique). Ils sont ajoutés en quantité suffisante pour maintenir le métal complexé et dissous dans le mélange pendant toute la préparation du gel.

Le métal peut être un métal appartenant aux groupes IVb (Ti, Zr, Hf), Vb (V, Nb, Ta), VIb (Cr, Mo, W), VIIb(Mn, Tc, Re), VIII (Fe, Co, Ni, Ru, Rh, Pd, Os, Ir, Pt), Ib (Cu, Ag, Au), ou encore un alliage de ces métaux. La quantité de sel de métal introduite dépend de la teneur désirée en métal du matériau.

L'aldéhyde est généralement ajouté après dissolution complète du sel de métal dans le benzène hydroxylé pour donner le mélange de départ. Le pH de départ est généralement compris entre 2 et 4 si le solvant utilisé est de l'eau.

Le pH du mélange est ensuite relevé au moyen d'une base pour atteindre des valeurs souhaitées. Au cas où le pH de la solution de départ serait plus élevé que le pH désiré, celui-ci peut être ajusté à l'aide d'un acide, tel que HNO₃ ou l'acide acétique par exemple.

L'invention concerne également selon un deuxième aspect une méthode de préparation de matériau carboné à texture poreuse déterminée comprenant un séchage du gel organique obtenu à l'issue du mélange de départ.

L'élimination du solvant peut se faire par transfert de solvant, par séchage supercritique ou par simple évaporation de solvant soit sous vide, soit à l'air libre, soit sous balayage de gaz. On choisira de préférence un séchage par simple évaporation. Trois variables conditionnent un séchage : pression, température et environnement de séchage. Celles-ci dépendent de la vitesse de séchage désirée. Une maîtrise de la vitesse est importante pour une conservation de la forme du matériau en carbone, surtout en cas de préparation d'une plaque de faible épaisseur. Un séchage trop rapide, surtout en début de procédé risque de déformer la plaque, particulièrement si chaque face n'est pas exposée de manière identique à l'atmosphère. Si l'on souhaite ralentir le séchage, on peut se placer sous atmosphère humide. Si on désire l'accélérer on peut se placer sous balayage de gaz sec tel que de l'azote, un gaz rare ou de l'air sec.

Une fois le séchage terminé, on obtient un matériau généralement monolithique dont la texture varie avec le pH de la solution de départ. Le matériau peut être très poreux (surface spécifique : 500 m²/g - volume poreux : 1.3 cm³/g voire plus), ou très peu poreux (surface spécifique : < 40 m²/g - volume poreux : 0.3 cm³/g voire moins).

L'invention concerne également selon un troisième aspect une méthode de préparation de matériau carboné à texture poreuse déterminée comprenant un pyrolyse du gel organique sec obtenu à l'issue du séchage.

Le gel organique séché est pyrolysé sous atmosphère inerte en évitant toute infiltration d'oxygène. Dans le cas de matériaux non chargés en métal, les traces de gaz oxydant conduisent à une modification de la texture poreuse, plus particulièrement une augmentation de la surface spécifique due à une augmentation de la quantité de micropores.
La température maximale de pyrolyse peut être choisie entre 500°C et 3000°C. Celle-ci peut être atteinte directement par chauffage progressif, ou par paliers successifs échelonnés à des températures choisies (en général, il s'agit de températures correspondant à l'élimination de composés donnés).

La température finale de pyrolyse peut modifier la texture finale du matériau comme décrit par Chuan Lin et James A. Ritter (Carbon 38(2000), 849-861). La durée de la pyrolyse varie avec la taille des matériaux à pyrolyser. Il suffit en fait de vérifier que le matériau est bien composé uniquement de carbone à la fin de celle-ci.

Le matériau carboné final ainsi obtenu est pratiquement pur. Sa texture poreuse est directement dépendante des conditions de préparation du gel organique de départ. Si on veut obtenir une surface spécifique et un volume poreux élévés ainsi qu'une large distribution de la taille des pores pour le mélange résorcinol-formaldéhyde, on se place de préférence à des conditions de pH entre 6 et 7. De cette texture poreuse dépendra toute propriété physico-mécanique du matériau telle que résistance mécanique ou dureté du matériau

Ainsi pour des pH compris entre 6.0 et 6.9, on obtient un matériau poreux à la fois microporeux et mésoporeux. Si le pH est supérieur ou égal à 7, le matériau est quasi non-poreux. Si le pH est compris entre 5.5 et 6.0, le matériau obtenu devient microporeux et macroporeux (peu ou pas de mésopores) et finit par perdre sa résistance mécanique (matériau friable) si le pH est inférieur à 5.5.

En particulier, la méthode de préparation d'un matériau carboné selon l'invention s'adresse également à un matériau chargé en métal. Dans ce cas le gel organique de départ est un gel chargé en métal auquel on applique un séchage par élimination de solvant et de préférence par évaporation du solvant puis une pyrolyse sous atmosphère inerte comme pour les matériaux carbonés dépourvus de métal. Si on veut modifier la texture poreuse, il est possible d'ajouter de petites quantités de d'un gaz oxydant lors de la pyrolyse.
La température finale de pyrolyse peut modifier également la texture finale du matériau comme décrit par Chuan Lin et James A. Ritter (Carbon 38(2000), 849-861).
La durée de la pyrolyse varie avec la taille des matériaux à pyrolyser. Pour s'assurer que la pyrolyse est terminée, il suffit en fait de vérifier que le matériau obtenu est bien composé uniquement de carbone et de métal à la fin de celle-ci.

La texture poreuse obtenue pour le matériau carboné chargé de métal est également fonction des conditions de préparation du gel. L'intervalle de variation de pH permettant d'obtenir des matériaux possédant à la fois une grande surface spécifique, un grand volume poreux, et une résistance mécanique élevée varie avec le métal introduit mais également avec le complexant utilisé pour dissoudre le sel de métal.

Dans le cas de matériaux chargés en métal obtenus à partir d'un mélange de résorcinol-formaldéhyde dans l'eau, le métal est introduit dans la solution de départ par le biais d'un sel de métal soluble ou rendu soluble par complexation. Dans ce cas, nous avons trouvé que la fourchette de pH intéressante, c'est-à-dire pour laquelle on obtient finalement un matériau carboné possédant à la fois une grande surface spécifique, un grand volume poreux et une résistance mécanique suffisante, varie avec le métal introduit dans le mélange, mais aussi avec la nature et la quantité de complexant utilisé.

Dans le cas de matériau chargé en nickel obtenu par complexation directe du nickel par le résorcinol, si on veut obtenir une surface spécifique et un volume poreux élevés ainsi qu'une large distribution de la taille des pores pour le mélange résorcinol-formaldéhyde, on doit se placer de préférence à des conditions de pH entre 5.5 et 7.

Pour des pH compris entre 5.5 et 6.75, on obtient un matériau à la fois microporeux et mésoporeux. Si le pH est supérieur ou égal à 7, le matériau est quasi non-poreux. Si le pH est inférieur à 5.5, le matériau obtenu devient microporeux et macroporeux (peu ou pas de mésopores), et perd sa résistance mécanique (matériau friable).

Dans le cas de matériau chargé en Pd, avec du DTPA comme complexant, ; lorsque le mélange de départ a un pH compris entre 6.25 et 7.25, on obtient un matériau à la fois microporeux et mésoporeux. Si le pH est supérieur ou égal à 7.5, le matériau est quasi non-poreux. Si le pH est inférieur à 6.25, le matériau obtenu devient microporeux et macroporeux (peu ou pas de mésopores), et perd sa résistance mécanique (matériau friable).

Le matériau carboné chargé ou non en métal est bon conducteur d'électricité. Il est également monolithique et possède une perméabilité aux gaz qui varie avec la texture poreuse du matériau.
Ces matériaux sont utilisés en catalyse chimique ou pour la fabrication d'électrodes de piles à combustible comme par exemple les piles alcalines (Alkaline Fuel Cell), les piles à membrane polymère (Proton exchange membrane fuel cell) et les piles à acide phosphorique.

L'invention est illustrée ci-après au moyen d'exemples.

### EXEMPLE 1 : préparation de gels de résorcinol-formaldéhyde dans l'eau

La réaction de polymérisation du résorcinol avec le formaldéhyde a lieu dans de l'eau comme solvant. Les quantités de résorcinol et le formaldéhyde mises en présence sont choisies en proportions molaires 1 : 2 (proportions stoechiométriques). La proportion de solvant peut varier, mais a été fixée dans notre cas à 10 ml d'eau pour 5.27 g de résorcinol.

### Réactifs utilisés

Résorcinol : VEL - en paillettes - pur
Formol : ALDRICH - solution à 37% en poids dans l'eau
Hydroxyde de sodium : VEL - en pastilles - pureté 98-100 %
Eau désionisée

### Préparation du gel

5.27 g de résorcinol sont dissous dans 10 ml d'eau désionisée à l'intérieur d'un flacon étanche de 100 ml : le mélange est laissé sous agitation magnétique jusqu'à dissolution complète du résorcinol (10 minutes environ).
7.2 ml de formol sont ensuite ajoutés, et le mélange est homogénéisé par agitation.
Le pH de la solution qui va former le gel est ensuite fixé entre 6 et 7 en utilisant une solution aqueuse de base (NaOH).

La solution est placée dans un récipient fermé, et chauffée (85°C) durant 3 jours. Le matériau obtenu est un gel de couleur rouge foncé translucide (pour les pH les plus élevés) à brun clair opaque (pour les pH les plus bas).

### Séchage du gel

Le gel obtenu est séché par simple évaporation du solvant. Le gel est placé dans une étuve à 60°C, et la pression est progressivement diminuée de 1.013*10⁵ Pa à 1*10³ Pa. Cette étape de séchage est étalée sur 5 jours. Le gel est finalement laissé 3 jours sous vide (1*10³ Pa ) à la température de 150 °C.

Une fois le séchage terminé, on obtient un matériau monolithique dont la texture varie avec le pH de la solution de départ. Le matériau peut être très poreux (surface spécifique : 500 m²/g - volume poreux : 1.3 cm³/g voire plus), ou très peu poreux (surface spécifique : < 40 m²/g- volume poreux : 0.3 cm³/g voire moins).

### Pyrolyse sous atmosphère inerte

Le gel sec est ensuite pyrolysé jusque 800°C (2 h) sous atmosphère inerte (N₂). Dans notre cas, cette température a été atteinte en passant par deux paliers (150°C-15min; 400°C- 1h).

Le matériau ainsi obtenu est composé de carbone quasiment pur. Sa texture varie également avec les conditions de préparation du gel, c'est-à-dire du mélange de départ : il peut être très poreux (surface spécifique : 600 m²/g voire plus - volume poreux : 1.5 cm³/g voire plus), ou très peu poreux (surface spécifique : < 40 m²/g - volume poreux : < 0.1 cm³/g).

Le matériau étant constitué de carbone, il est bon conducteur de l'électricité. Il est également monolithique et, possède une perméabilité aux gaz qui varie très fort avec la texture du matériau (de quasi non perméable à plus de 2 ml/(min.cm²), pour un test de perméabilité effectué à l'azote, et une différence de pression de 5.33*10⁴ Pa entre les deux côtés d'une plaque de 1 mm d'épaisseur).
Après séchage et pyrolyse, le gel a subi une diminution de volume variant de 60 à 80 % selon le pH envisagé, mais a conservé sa forme initiale (matériau carboné homothétique au gel de départ). Cette contraction peut être prévue au départ, et la taille de la pièce moulée adaptée en conséquence.

### Conditions de préparation

Les conditions de préparation du gel, et plus précisément le pH de la solution de résorcinol-formaldéhyde de départ ont détermine la texture du matériau carboné final, c'est-à-dire la surface spécifique, le volume poreux, et la distribution de la taille des pores. Le tableau 1 donne les propriétés texturales des matériaux carbonés obtenus pour des valeurs de pH variant de 7.05 à 6.03.

**Tableau 1 :**

| surface spécifique et volume poreux des matériaux carbonés (après pyrolyse) dont le pH du mélange de départ varie entre 7.05 et 6.03. | | | |
|---|---|---|---|
| pH de départ | Surface spécifique (m²/g) | Volume microporeux (cm³/g) | Volume poreux total (cm³/g) |
| 6.03 | 450 | 0.18 | 0.2* |
| 6.47 | 560 | 0.24 | 1.1* |
| 6.59 | 560 | 0.24 | 0.9* |
| 6.78 | 526 | 0.23 | 1.1 |
| 6.89 | 526 | 0.23 | 0.5 |
| 7.05 | <40 | <0.1 | <0.1 |
| Surface spécifique : déterminée par la méthode BET. Volume microporeux : volume poreux déterminé par la méthode de Dubinin représentant les pores de largeur inférieure à 2 nm. Volume poreux total : volume poreux déterminé à partir du volume adsorbé à la saturation, représentant les pores de largeur inférieure à 50 nm. | | | |

| | | | |
|---|---|---|---|
| * : matériau possédant des pores de largeur supérieure à 50 nm, et dont la contribution au volume poreux n'a pas été prise en compte. | | | |

Pour des pH compris entre 6.0 et 6.9, on obtient un matériau à la fois microporeux et mésoporeux. Si le pH est supérieur ou égal à 7, le matériau est quasi non-poreux. Si le pH est compris entre 5.5 et 6.0, le matériau obtenu devient microporeux et macroporeux (peu ou pas de mésopores) et finit par perdre sa résistance mécanique (matériau friable) si le pH est inférieur à 5.5.

### EXEMPLE 2 : préparation de gels de résorcinol-formaldéhyde chargés en nickel

De manière identique à l'exemple 1, la réaction de polymérisation du résorcinol avec le formaldéhyde a lieu dans l'eau avec en plus de l'acétate de nickel tétrahydraté : ALDRICH - 99.998 %.
Les quantités de résorcinol et le formaldéhyde mises en présence sont choisies en proportions molaires 1 : 2 (proportions stoechiométriques). La proportion de solvant peut varier, mais a été fixée dans notre cas à 10 ml d'eau pour 5.27 g de résorcinol.

Le métal (Ni) est introduit sous forme d'un sel (acétate de nickel). La quantité de sel varie en fonction de la teneur en métal désirée pour le matériau carboné final. Ici, la quantité d'acétate de nickel (tétrahydraté) introduite a été fixée à 0.191 g pour 10 ml d'eau (et 5.27 g de résorcinol).

On forme tout d'abord la solution de résorcinol dans l'eau, à laquelle on ajoute le sel de métal. Le résorcinol complexe par ailleurs le nickel (obtention d'une solution jaune foncé). Le mélange est laissé sous agitation magnétique pendant plusieurs heures. Le formol est ajouté après dissolution complète du sel et complexation du métal.

Le pH de la solution qui va former le gel est ensuite fixé entre 5.5 et 7 en utilisant une base (NaOH).

La solution est placée dans un récipient fermé, et chauffée (85°C) durant 3 jours.

Le gel obtenu est un gel de couleur rouge foncé translucide (pour les pH les plus élevés) à brun clair (pour les pH les plus bas).

### Séchage du gel

Le gel obtenu est séché par simple évaporation du solvant. Le gel est placé dans une étuve à 60°C, et la pression est progressivement diminuée de 1.032*10⁵ Pa à 1*10³ Pa. Cette étape de séchage est étalée sur 5 jours. Le gel est finalement laissé 3 jours sous vide (1 *10³ Pa) à la température de 150 °C.

Une fois le séchage terminé, on obtient un matériau monolithique dont la texture varie avec les conditions de préparation. Le matériau peut être très poreux (surface spécifique : 500 m²/g - volume poreux : 1.3 cm³/g voire plus), ou très peu poreux (surface spécifique : < 40 m²/g - volume poreux : 0.3 cm³/g).

### Pyrolyse sous atmosphère inerte

Le gel sec est ensuite pyrolysé jusque 800°C (2 h) sous atmosphère inerte (N₂). Dans notre cas, cette température a été atteinte en passant par deux paliers (150°C - 15 min ; 400°C - 1 h).

Le matériau ainsi obtenu est composé de carbone quasiment pur à l'intérieur duquel est dispersé le métal à l'état réduit (Ni métallique). Sa texture varie également avec les conditions de synthèse du gel : il peut être très poreux (surface spécifique: 700 m²/g voire plus - volume poreux: 1.5 cm³/g voire plus), ou très peu poreux (surface spécifique : < 40 m²/g - volume poreux : < 0.1 cm³/g).

Le matériau étant constitué de carbone, il est bon conducteur de l'électricité. Il est également monolithique et, possède une perméabilité aux gaz qui varie à nouveau très fort avec la texture du matériau (variation du même ordre de grandeur que le matériau non chargé en métal).
Après séchage et pyrolyse, le matériau a subi une diminution de volume de l'ordre de 60 à 80% (variable selon le pH de départ), mais a conservé sa forme initiale (matériau carboné homothétique au gel de départ). Cette contraction peut être prévue au départ, et la taille de la pièce moulée adaptée en conséquence.

### Conditions de préparation du gel

Les conditions de préparation du gel, et plus précisément le pH de la solution de résorcinol-formaldéhyde de départ ont déterminé la texture poreuse du matériau final, c'est-à-dire la surface spécifique, le volume poreux, et la distribution de la taille des pores.

Le tableau 2 donne la surface spécifique et volume poreux des matériaux carbonés chargés en nickel (environ 1.5 % en masse) obtenus pour des valeurs de pH variant de 6 et 7.

**Tableau 2 :**

| surface spécifique et volume poreux des matériaux carbonés chargé en Ni dont le pH de préparation du gel varie entre 6 et 7. | | | |
|---|---|---|---|
| pH de départ | Surface spécifique (m²/g) | Volume microporeux (cm³/g) | Volume poreux total (cm³/g) |
| 6.00 | 682 | 0.29 | 1.5 |
| 6.23 | 705 | 0.30 | 1.2 |
| 6.57 | 606 | 0.27 | 1.0 |
| 6.75 | 567 | 0.25 | 0.7 |
| 7.00 | 145 | 0.07 | 0.15 |
| Surface spécifique : déterminée par la méthode BET. | | | |
| Volume microporeux : volume poreux déterminé par la méthode de Dubinin représentant les pores de largeur inférieure à 2 nm. | | | |
| Volume poreux total : volume poreux déterminé à partir du volume adsorbé à la saturation, représentant les pores de largeur inférieure à 50 nm. | | | |

Pour des pH compris entre 6 et 6.75, on obtient un matériau à la fois microporeux et mésoporeux. Si le pH est supérieur ou égal à 7, le matériau est quasi non-poreux. Si le pH est inférieur à 6, le matériau obtenu devient microporeux et macroporeux (peu ou pas de mésopores), et perd sa résistance mécanique (matériau friable).

### EXEMPLE 3 : préparation de gels de résorcinol-formaldéhyde chargés en palladium

De manière identique à l'exemple 1, la réaction de polymérisation du résorcinol avec le formaldéhyde a lieu dans l'eau avec en plus de l'acétate de palladium (ALDRICH - 98 %), et un complexant, l'acide diéthylènetrinitrilopentaacétique (ALDRICH- 98%).

Les quantités de résorcinol et le formaldéhyde mises en présence sont choisies en proportions molaires 1 : 2 (proportions stoechiométriques). La proportion de solvant peut varier, mais a été fixée dans notre cas à 10 ml d'eau pour 5.27 g de résorcinol.

Le métal (Pd) est introduit sous forme d'un sel (acétate de palladium). La quantité de sel varie en fonction de la teneur en métal désirée pour le matériau carboné final. Ici, la quantité d'acétate de palladium introduite a été fixée à 0.0970 g pour 10 ml d'eau (et 5.27 g de résorcinol). Le palladium est complexé par du DTPA (acide diéthylènetrinitrilopentaacétique), et le rapport molaire complexant/métal est fixé à 1 : donc, 0.1700 g de DTPA sont introduits dans la solution.

On forme tout d'abord la solution de complexant et de sel de métal dans l'eau, à laquelle on ajoute le résorcinol. Le mélange est laissé sous agitation magnétique pendant plusieurs heures. On obtient une solution orange limpide. Le formol est ajouté après dissolution complète du sel et complexation du métal.

Le pH de la solution qui va former le gel est ensuite fixé entre 5 et 8 en utilisant une base (NaOH).

La solution est placée dans un récipient fermé, et chauffée (85°C) durant 3 jours.

Le gel obtenu est un gel de couleur rouge foncé translucide (pour les pH les plus élevés) à brun clair opaque (pour les pH les plus bas).

### Séchage du gel

Le gel obtenu est séché par simple évaporation du solvant. Le gel est placé dans une étuve à 60°C, et la pression est progressivement diminuée de 1.013*10⁵ Pa à 1*10³ Pa. Cette étape de séchage est étalée sur 5 jours. Le gel est finalement laissé 3 jours sous vide (1*10³ Pa) à la température de 150 °C.

Une fois le séchage terminé, on obtient un matériau monolithique dont la texture varie avec les conditions de synthèse. Le matériau peut être très poreux (surface spécifique : 500 m²/g - volume poreux : 1.3 cm³/g voire plus), ou très peu poreux (surface spécifique : < 100 m²/g - volume poreux : 0.3 cm³/g).

### Pyrolyse sous atmosphère inerte

Le gel sec est ensuite pyrolysé jusque 800°C (2 h) sous atmosphère inerte (N₂). Dans notre cas, cette température a été atteinte en passant par deux paliers (150°C - 15 min ; 400°C - 1 h).

Le matériau ainsi obtenu est composé de carbone quasiment pur à l'intérieur duquel est dispersé le métal à l'état réduit (Pd métallique). Sa texture varie également avec les conditions de synthèse du gel : il peut être très poreux (surface spécifique : 600 m²/g voire plus - volume poreux : 1.4 cm³/g voire plus), ou très peu poreux (surface spécifique : < 40 m²/g- volume poreux : < 0.3 cm³/g).

Le matériau étant constitué de carbone, il est bon conducteur de l'électricité. Il est également monolithique et, possède une perméabilité aux gaz qui varie à nouveau très fort avec la texture du matériau (variation du même ordre de grandeur que le matériau non chargé en métal).

Après séchage et pyrolyse, le gel a subi une diminution de volume de l'ordre de 60 à 80% (variable selon le pH de départ), mais a conservé sa forme initiale (matériau carboné homothétique au gel de départ). Cette contraction peut être prévue au départ, et la taille de la pièce moulée adaptée en conséquence.

### Conditions de préparation du gel

Les conditions de préparation du gel, et plus précisément le pH de la solution de résorcinol-formaldéhyde de départ (contenant le métal complexé), ont déterminé la texture poreuse du matériau final, c'est-à-dire la surface spécifique, le volume poreux, et la distribution de la taille des pores.

Le tableau 3 donne la surface spécifique et volume poreux des matériaux carbonés chargés en palladium (environ 1.5 % en masse) obtenus pour des valeurs de pH variant de 5.53 et 7.49.

**Tableau 3 :**

| surface spécifique et volume poreux des matériaux carbonés dont le pH de préparation du gel varie entre 5.53 et 7.49. | | | |
|---|---|---|---|
| pH de départ | Surface spécifique (m²/g) | Volume microporeux (cm³/g) | Volume poreux total (cm³/g) |
| 5.53 | 607 | 0.26 | 1.43* |
| 6.03 | 567 | 0.25 | 1.16* |
| 6.64 | 546 | 0.24 | 1.12 |
| 7.01 | 508 | 0.22 | 0.656 |
| 7.49 | <40 | <0.1 | <0.3 |
| Surface spécifique : déterminée par la méthode BET. | | | |
| Volume microporeux : volume poreux déterminé par la méthode de Dubinin représentant les pores de largeur inférieure à 2 nm. | | | |
| Volume poreux total : volume poreux déterminé à partir du volume adsorbé à la saturation, représentant les pores de largeur inférieure à 50 nm. | | | |

| | | | |
|---|---|---|---|
| * : matériau possédant des pores de largeur supérieure à 50 nm , et dont la contribution au volume poreux n'a pas été prise en compte. | | | |

Pour des pH compris entre 6.25 et 7.25, on obtient un matériau à la fois microporeux et mésoporeux. Si le pH est supérieur ou égal à 7.5, le matériau est quasi non-poreux. Si le pH est inférieur à 6.25, le matériau obtenu devient microporeux et macroporeux (peu ou pas de mésopores), et perd sa résistance mécanique (matériau friable).

## Revendications

1. Méthode de préparation d'un gel organique de texture poreuse déterminée comprenant un mélange de benzène hydroxylé et d'aldéhyde dans un solvant, **caractérisé en ce que** la texture du gel est régulée par ajustement du pH du mélange de départ.

2. Méthode de préparation selon la revendication 1 **caractérisé en ce que** le pH est ajusté au moyen d'une base.

3. Méthode de préparation selon la revendication précédente **caractérisée en ce que** la base est du NaOH.

4. Méthode de préparation selon l'une des revendications précédentes **caractérisée en ce que** le benzène hydroxylé est du résorcinol et l'aldéhyde du formaldéhyde.

5. Méthode de préparation selon la revendication précédente **caractérisée en ce que** le résorcinol et le formaldéhyde sont mélangés en proportions molaires 1 :2.

6. Méthode de préparation selon l'une quelconque des revendications précédentes **caractérisée en ce qu'** un sel de métal est ajouté au mélange de départ.

7. Méthode de préparation selon la revendication précédente **caractérisée en ce qu'**un complexant est également ajouté au mélange de départ.

8. Méthode de préparation selon l'une des revendications 6 ou 7 **caractérisé en ce que** le métal est du nickel.

9. Méthode de préparation d'un gel organique selon l'une des revendications 1 à 8 comprenant également une étape de séchage du gel obtenu.

10. Méthode de préparation d'un gel organique selon la revendication précédente **caractérisée en ce que** le séchage se fait par simple vaporisation du solvant.

11. Méthode de préparation d'un gel organique selon l'une des revendications 9 ou 10 **caractérisé en ce que** le gel organique est chargé en métal.

12. Méthode de préparation de matériau carboné à texture poreuse déterminée comprenant une pyrolyse du gel organique sec obtenu selon la méthode de préparation selon l'une des revendications 9 ou 10.

13. Méthode de préparation de matériau carboné selon la revendication 12 **caractérisé en ce que** le matériau carboné est chargé en métal.

14. Gel organique chargé en métal de texture poreuse déterminée susceptible d'être obtenu selon la méthode de préparation de l'une quelconque des revendication 6 à 8.

15. Gel organique chargé en métal susceptible d'être obtenu par la méthode de préparation selon la revendication 11

16. Matériau carboné chargé en métal de texture poreuse déterminée susceptible d'être obtenu selon la méthode de préparation de la revendication 13.

17. Utilisation du matériau carboné selon la revendication 16 en catalyse chimique.

18. Utilisation du matériau carboné selon la revendication 16 pour la fabrication d'électrode de pile à combustible.
